# EUROPEAN PATENT APPLICATION

(11) **EP 3 410 790 A1**
(43) Date of publication of application: **05.12.2018**
(21) Application number: 16891939.7
(22) Date of filing: 29.02.2016
(51) Int. Cl.: H04W 56/00

(54) **TIME SYNCHRONIZATION METHOD, DEVICE AND SYSTEM**

(71) Applicant: Huawei Technologies Co., Ltd., Longgang District Shenzhen, Guangdong 518129 (CN)
(72) Inventor: WANG, Man, Shenzhen, Guangdong 518129 (CN); ZHOU, Kaijie, Shenzhen, Guangdong 518129 (CN)
(74) Representative: Maiwald Patent- und Rechtsanwaltsgesellschaft mbH
(86) International application number: PCT/CN2016/074819
(87) International publication number: WO 2017/147746

(57) **Abstract**

Embodiments of the present invention provide a time synchronization method, device, and system, and relate to the communications field. The method includes: determining a target base station from neighboring base stations of a source base station; determining, based on a preset handover condition and from first user equipments UEs connected to the source base station, to-be-handed-over UE that needs to be handed over to the target base station; triggering the to-be-handed-over UE to be handed over from the source base station to the target base station; and performing time synchronization with the target base station in a handover process of the to-be-handed-over UE. In the present invention, the to-be-handed-over UE is triggered to be handed over to the pre-determined target base station. This implements time synchronization with the target base station, resolves relatively low flexibility of time synchronization between base stations in a related technology, and improves flexibility of time synchronization between the source base station and the target base station. The present invention is used for time synchronization.

## Description

### TECHNICAL FIELD

The present invention relates to the communications field, and in particular, to a time synchronization method, device, and system.

### BACKGROUND

In a wireless communications system, user equipment (English: User Equipment, UE for short) can implement wireless communication with another UE by using a base station. To avoid signal interference between base stations, time synchronization needs to be performed between the base stations. With development of services such as a multimedia broadcast/multicast service (English: Multimedia Broadcast/Multicast Service, MBMS for short) and a coordinated multipoint transmission (English: Coordinated Multipoint Transmission, CoMP for short) service in the wireless communications system, an increasingly high requirement is imposed on precision of the time synchronization between the base stations.

In a related technology, time synchronization between base stations may be performed in a process in which UE is handed over from a source base station to a target base station. Specifically, the source base station may perform handover decision based on a neighboring cell detection report sent by target UE. When the target UE satisfies a criterion for handover to the target base station, the source base station may send, to the target base station, a handover request used to instruct to perform time synchronization. The target base station may select, according to the handover request and from a plurality of preambles (the plurality of preambles are obtained from a plurality of root sequences) of a cell managed by the target base station, a preamble as a random access preamble of the target UE, and send handover request acknowledgement information to the source base station. The handover request acknowledgement information includes the random access preamble. After receiving the handover request acknowledgement information, the source base station may start to perform blind detection on the random access preamble, and send a handover instruction to the target UE. The handover instruction includes the random access preamble. Then, the target UE sends the random access preamble to the target base station. The target base station records a first time point at which the random access preamble is received, and the source base station records a second time point at which the random access preamble is detected. The target base station sends the first time point to the source base station. The source base station calculates a time difference between the first time point and the second time point, and then adjusts a time of the source base station based on the time difference, to implement time synchronization between the target base station and the source base station.

However, in the related technology, only after the source base station determines, through handover decision, that there is target UE satisfying the handover criterion, the source base station and the target base station can perform time synchronization by using a handover process of the target UE, thereby causing relatively poor flexibility of time synchronization between the source base station and the target base station.

### SUMMARY

To resolve relatively poor flexibility of time synchronization between a source base station and a target base station in a related technology, the present invention provides a time synchronization method, device, and system. The technical solutions are as follows:
According to a first aspect, a time synchronization method is provided, where the method is applied to a source base station and includes:
determining a target base station from neighboring base stations of the source base station;
determining, based on a preset handover condition and from first user equipments UEs connected to the source base station, to-be-handed-over UE that needs to be handed over to the target base station;
triggering the to-be-handed-over UE to be handed over from the source base station to the target base station; and
performing time synchronization with the target base station in a handover process of the to-be-handed-over UE.

Optionally, before the determining, based on a preset handover condition and from first UEs connected to the source base station, to-be-handed-over UE that needs to be handed over to the target base station, the method further includes:
determining whether a quantity of second UEs handed over from the source base station to the target base station within a preset time period is greater than a preset quantity threshold; and
the determining, based on a preset handover condition and from first UEs connected to the source base station, to-be-handed-over UE that needs to be handed over to the target base station includes:
   when the quantity of second UEs handed over from the source base station to the target base station within the preset time period is not greater than the preset quantity threshold, determining the to-be-handed-over UE from the first UEs based on the preset handover condition.

Optionally, after the determining whether a quantity of second UEs handed over from the source base station to the target base station within a preset time period is greater than a preset quantity threshold, the method further includes:
when the quantity of second UEs handed over from the source base station to the target base station within the preset time period is greater than the preset quantity threshold, obtaining time information recorded by the source base station in a handover process of the second UE within the preset time period, where the time information includes a first time point at which the target base station receives a random access preamble sent by the second UE, and a second time point at which the random access preamble is detected by the source base station; and
performing time synchronization with the target base station based on the time information recorded by the source base station in the handover process of the second UE.

Optionally, the determining, based on a preset handover condition and from first UEs connected to the source base station, to-be-handed-over UE that needs to be handed over to the target base station includes:
obtaining evaluation information of the first UEs, where the evaluation information is used to reflect signal quality between the first UEs and the source base station and signal quality between the first UEs and the target base station;
determining candidate UE from the first UEs based on the evaluation information;
determining a quantity of candidate UEs; and
when the quantity of candidate UEs is greater than 1, determining the to-be-handed-over UE from the candidate UEs based on service traffic of the candidate UEs.
Optionally, the evaluation information includes at least one of location information of the first UEs or neighboring cell detection reports of the first UEs; and
the determining candidate UE from the first UEs based on the evaluation information includes:
   determining, based on the location information of the first UEs or the neighboring cell detection reports of the first UEs, areas in which the first UEs are located, and determining, among the first UEs, UE located in a preset handover area as the candidate UE, where the preset handover area is determined based on coverage areas of the source base station and the target base station; and/or
   determining, based on the neighboring cell detection reports of the first UEs, first signal quality between the first UEs and the source base station and second signal quality between the first UEs and the target base station, and determining, among the first UEs, UE whose difference between first signal quality and second signal quality is less than a preset quality difference threshold, UE whose first signal quality is lower than a first preset quality threshold, or UE whose second signal quality is higher than a second preset quality threshold as the candidate UE.

Optionally, after the determining whether a quantity of candidate UEs is greater than 1, the method further includes:
when the quantity of candidate UEs is less than 1, enlarging the preset handover area, and re-determining candidate UE from the first UEs based on the evaluation information.

Optionally, the determining the to-be-handed-over UE from the candidate UEs based on service traffic of the candidate UEs includes:
determining UE with minimum service traffic in the candidate UEs as the to-be-handed-over UE.

Optionally, after the determining the to-be-handed-over UE from the candidate UEs based on service traffic of the candidate UEs, the method further includes:
monitoring service traffic of the to-be-handed-over UE; and
the triggering the to-be-handed-over UE to be handed over from the source base station to the target base station includes:
   when it is detected that the service traffic of the to-be-handed-over UE is 0, triggering the to-be-handed-over UE to be handed over from the source base station to the target base station.

Optionally, the determining a target base station from neighboring base stations of the source base station includes:
determining the target base station from the neighboring base stations of the source base station every other preset time period; or
determining the target base station from the neighboring base stations of the source base station when out-of-synchronization error information is received; or
determining the target base station from the neighboring base stations of the source base station when a synchronization instruction is received.

Optionally, the determining a target base station from neighboring base stations of the source base station includes:
randomly selecting, from the neighboring base stations of the source base station, a base station as the target base station; or
selecting a base station with a highest synchronization priority as the target base station based on a preset synchronization list, where base stations that are adjacent to the source base station and that need to be synchronized with the source base station, and synchronization priorities of the base stations are recorded in the synchronization list.

Optionally, the triggering the to-be-handed-over UE to be handed over from the source base station to the target base station includes:
sending, to the target base station, a handover request used to request time synchronization with the target base station, where the handover request includes an identifier of the to-be-handed-over UE;
receiving handover request acknowledgement information sent by the target base station, where the handover request acknowledgement information includes a target random access preamble allocated by the target base station to the to-be-handed-over UE; and
sending a handover instruction to the to-be-handed-over UE, where the handover instruction includes the target random access preamble, the handover instruction is used to instruct the to-be-handed-over UE to send a random access request to the target base station, and the random access request includes the target random access preamble; and
the performing time synchronization with the target base station in a handover process of the to-be-handed-over UE includes:
   obtaining a first time point, where the first time point is a time point at which the target random access preamble sent by the to-be-handed-over UE to the target base station is detected by the source base station;
   receiving a second time point sent by the target base station, where the second time point is a time point at which the target base station receives the target random access preamble sent by the to-be-handed-over UE; and
   calculating a time difference between the first time point and the second time point, and performing time adjustment based on the time difference.

According to a second aspect, a device for time synchronization is provided, where the device is applied to a source base station and includes:
a first determining unit, configured to determine a target base station from neighboring base stations of the source base station;
a second determining unit, configured to determine, based on a preset handover condition and from first user equipments UEs connected to the source base station, to-be-handed-over UE that needs to be handed over to the target base station, where the target base station is a neighboring base station of the source base station;
a trigger unit, configured to trigger the to-be-handed-over UE to be handed over from the source base station to the target base station; and
a first synchronization unit, configured to perform time synchronization with the target base station in a handover process of the to-be-handed-over UE.

Optionally, the device further includes:
a judgment unit, configured to determine whether a quantity of second UEs handed over from the source base station to the target base station within a preset time period is greater than a preset quantity threshold, where
the second determining unit is further configured to: when the quantity of second UEs handed over from the source base station to the target base station within the preset time period is not greater than the preset quantity threshold, determine the to-be-handed-over UE from the first UEs based on the preset handover condition.

Optionally, the device further includes:
an obtaining unit, configured to: when the quantity of second UEs handed over from the source base station to the target base station within the preset time period is greater than the preset quantity threshold, obtain time information recorded by the source base station in a handover process of the second UE within the preset time period, where the time information includes a first time point at which the target base station receives a random access preamble sent by the second UE, and a second time point at which the random access preamble is detected by the source base station; and
a second synchronization unit, configured to perform time synchronization with the target base station based on the time information recorded by the source base station in the handover process of the second UE.

Optionally, the second determining unit includes:
an obtaining subunit, configured to obtain evaluation information of the first UEs, where the evaluation information is used to reflect signal quality between the first UEs and the source base station and signal quality between the first UEs and the target base station;
a first determining subunit, configured to determine candidate UE from the first UEs based on the evaluation information;
a second determining subunit, configured to determine a quantity of candidate UEs; and
a third determining subunit, configured to: when the quantity of candidate UEs is greater than 1, determine the to-be-handed-over UE from the candidate UEs based on service traffic of the candidate UEs.

Optionally, the evaluation information includes at least one of location information of the first UEs or neighboring cell detection reports of the first UEs; and
the first determining subunit is further configured to:
determine, based on the location information of the first UEs or the neighboring cell detection reports of the first UEs, areas in which the first UEs are located, and determine, among the first UEs, UE located in a preset handover area as the candidate UE, where the preset handover area is determined based on coverage areas of the source base station and the target base station; and/or
determine, based on the neighboring cell detection reports of the first UEs, first signal quality between the first UEs and the source base station and second signal quality between the first UEs and the target base station, and determine, among the first UEs, UE whose difference between first signal quality and second signal quality is less than a preset quality difference threshold, UE whose first signal quality is lower than a first preset quality threshold, or UE whose second signal quality is higher than a second preset quality threshold as the candidate UE.

Optionally, the second determining unit further includes:
a fourth determining subunit, configured to: when the quantity of candidate UEs is less than 1, enlarge the preset handover area, and re-determine candidate UE from the first UEs based on the evaluation information.

Optionally, the third determining subunit is further configured to:
determine UE with minimum service traffic in the candidate UEs as the to-be-handed-over UE.

Optionally, the second determining unit further includes:
a monitoring subunit, configured to monitor service traffic of the to-be-handed-over UE; and
the trigger unit is further configured to:
when it is detected that the service traffic of the to-be-handed-over UE is 0, trigger the to-be-handed-over UE to be handed over from the source base station to the target base station.

Optionally, the first determining unit is further configured to:
determine the target base station from the neighboring base stations of the source base station every other preset time period; or
determine the target base station from the neighboring base stations of the source base station when out-of-synchronization error information is received; or
determine the target base station from the neighboring base stations of the source base station when a synchronization instruction is received.

Optionally, the first determining unit is further configured to:
randomly select, from the neighboring base stations of the source base station, a base station as the target base station; or
select a base station with a highest synchronization priority as the target base station based on a preset synchronization list, where base stations that are adjacent to the source base station and that need to be synchronized with the source base station, and synchronization priorities of the base stations are recorded in the synchronization list.

Optionally, the trigger unit is further configured to:
send, to the target base station, a handover request used to request time synchronization with the target base station, where the handover request includes an identifier of the to-be-handed-over UE;
receive handover request acknowledgement information sent by the target base station, where the handover request acknowledgement information includes a target random access preamble allocated by the target base station to the to-be-handed-over UE; and
send a handover instruction to the to-be-handed-over UE, where the handover instruction includes the target random access preamble, the handover instruction is used to instruct the to-be-handed-over UE to send a random access request to the target base station, and the random access request includes the target random access preamble; and
the first synchronization unit is further configured to:
   obtain a first time point, where the first time point is a time point at which the target random access preamble sent by the to-be-handed-over UE to the target base station is detected by the source base station;
   receive a second time point sent by the target base station, where the second time point is a time point at which the target base station receives the target random access preamble sent by the to-be-handed-over UE; and
   calculate a time difference between the first time point and the second time point, and perform time adjustment based on the time difference.

According to a third aspect, a device for time synchronization is provided, where the device is applied to a source base station and includes a transmitter, a receiver, and a processor, and the processor is configured to:
determine a target base station from neighboring base stations of the source base station;
determine, based on a preset handover condition and from first user equipments UEs connected to the source base station, to-be-handed-over UE that needs to be handed over to the target base station, where the target base station is a neighboring base station of the source base station;
trigger the to-be-handed-over UE to be handed over from the source base station to the target base station; and
perform time synchronization with the target base station in a handover process of the to-be-handed-over UE.

Optionally, the processor is further configured to:
determine whether a quantity of second UEs handed over from the source base station to the target base station within a preset time period is greater than a preset quantity threshold; and
when the quantity of second UEs handed over from the source base station to the target base station within the preset time period is not greater than the preset quantity threshold, determine the to-be-handed-over UE from the first UEs based on the preset handover condition.

Optionally, the processor is further configured to:
when the quantity of second UEs handed over from the source base station to the target base station within the preset time period is greater than the preset quantity threshold, obtain time information recorded by the source base station in a handover process of the second UE within the preset time period, where the time information includes a first time point at which the target base station receives a random access preamble sent by the second UE, and a second time point at which the random access preamble is detected by the source base station; and
perform time synchronization with the target base station based on the time information recorded by the source base station in the handover process of the second UE.

Optionally, the processor is further configured to:
obtain evaluation information of the first UEs, where the evaluation information is used to reflect signal quality between the first UEs and the source base station and signal quality between the first UEs and the target base station;
determine candidate UE from the first UEs based on the evaluation information;
determine a quantity of candidate UEs; and
when the quantity of candidate UEs is greater than 1, determine the to-be-handed-over UE from the candidate UEs based on service traffic of the candidate UEs.

Optionally, the evaluation information includes at least one of location information of the first UEs or neighboring cell detection reports of the first UEs; and
the processor is further configured to:
determine, based on the location information of the first UEs or the neighboring cell detection reports of the first UEs, areas in which the first UEs are located, and determine, among the first UEs, UE located in a preset handover area as the candidate UE, where the preset handover area is determined based on coverage areas of the source base station and the target base station; and/or
determine, based on the neighboring cell detection reports of the first UEs, first signal quality between the first UEs and the source base station and second signal quality between the first UEs and the target base station, and determine, among the first UEs, UE whose difference between first signal quality and second signal quality is less than a preset quality difference threshold, UE whose first signal quality is lower than a first preset quality threshold, or UE whose second signal quality is higher than a second preset quality threshold as the candidate UE.

Optionally, the processor is further configured to:
when the quantity of candidate UEs is less than 1, enlarge the preset handover area, and re-determine candidate UE from the first UEs based on the evaluation information.

Optionally, the processor is further configured to:
determine UE with minimum service traffic in the candidate UEs as the to-be-handed-over UE.

Optionally, the processor is further configured to:
monitor service traffic of the to-be-handed-over UE; and
when it is detected that the service traffic of the to-be-handed-over UE is 0, trigger the to-be-handed-over UE to be handed over from the source base station to the target base station.

Optionally, the processor is further configured to:
determine the target base station from the neighboring base stations of the source base station every other preset time period; or
determine the target base station from the neighboring base stations of the source base station when out-of-synchronization error information is received; or
determine the target base station from the neighboring base stations of the source base station when a synchronization instruction is received.

Optionally, the processor is further configured to:
randomly select, from the neighboring base stations of the source base station, a base station as the target base station; or
select a base station with a highest synchronization priority as the target base station based on a preset synchronization list, where base stations that are adjacent to the source base station and that need to be synchronized with the source base station, and synchronization priorities of the base stations are recorded in the synchronization list.

Optionally, the transmitter is configured to send, to the target base station, a handover request used to request time synchronization with the target base station, where the handover request includes an identifier of the to-be-handed-over UE;
the receiver is configured to receive handover request acknowledgement information sent by the target base station, where the handover request acknowledgement information includes a target random access preamble allocated by the target base station to the to-be-handed-over UE;
the transmitter is further configured to send a handover instruction to the to-be-handed-over UE, where the handover instruction includes the target random access preamble, the handover instruction is used to instruct the to-be-handed-over UE to send a random access request to the target base station, and the random access request includes the target random access preamble;
the processor is further configured to:
obtain a first time point, where the first time point is a time point at which the target random access preamble sent by the to-be-handed-over UE to the target base station is detected by the source base station;
the receiver is further configured to receive a second time point sent by the target base station, where the second time point is a time point at which the target base station receives the target random access preamble sent by the to-be-handed-over UE; and
the processor is further configured to calculate a time difference between the first time point and the second time point, and perform time adjustment based on the time difference.

According to a fourth aspect, a time synchronization system is provided. The system includes a source base station; and
the source base station includes any device for time synchronization in the second aspect.

According to a fifth aspect, a time synchronization system is provided. The system includes a source base station; and
the source base station includes any device for time synchronization in the third aspect.

The technical solutions provided in the present invention have the following beneficial effects:
According to the time synchronization method, device, and system provided in the embodiments of the present invention, the source base station may determine the target base station from the neighboring base stations of the source base station, then determine, based on the preset handover condition and from the first UEs connected to the source base station, the to-be-handed-over UE that needs to be handed over to the target base station, trigger the to-be-handed-over UE to be handed over from the source base station to the target base station, and perform time synchronization with the target base station in the handover process of the to-be-handed-over UE. Therefore, when the source base station and the target base station need to be synchronized but there is no target UE satisfying a handover criterion, the source base station may select the to-be-handed-over UE based on the preset handover condition, and actively trigger the to-be-handed-over UE to be handed over to the target base station. This implements time synchronization between the source base station and the target base station, and improves flexibility of time synchronization between the source base station and the target base station.

It should be understood that the foregoing general descriptions and the following detailed descriptions are merely examples and explanations, and impose no limitation on the present invention.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of an environment of a time synchronization system related to a time synchronization method according to an embodiment of the present invention;
FIG. 2 is a flowchart of a time synchronization method according to an embodiment of the present invention;
FIG. 3-1 is a flowchart of another time synchronization method according to an embodiment of the present invention;
FIG. 3-2 is a schematic diagram of a preset handover area according to an embodiment of the present invention;
FIG. 3-3 is a flowchart of a method for triggering, by a source base station, to-be-handed-over UE to be handed over from the source base station to a target base station according to an embodiment of the present invention;
FIG. 4-1 is a schematic structural diagram of a device for time synchronization according to an embodiment of the present invention;
FIG. 4-2 is a schematic structural diagram of another device for time synchronization according to an embodiment of the present invention;
FIG. 4-3 is a schematic structural diagram of a second determining unit according to an embodiment of the present invention; and
FIG. 5 is a schematic structural diagram of still another device for time synchronization according to an embodiment of the present invention.

The foregoing accompanying drawings show specific embodiments of the present invention, and more detailed descriptions are provided in the following. The accompanying drawings and text descriptions are not intended to limit the scope of the idea of the present invention in any manner, but are intended to describe the concept of the present invention to a person skilled in the art with reference to particular embodiments.

### DESCRIPTION OF EMBODIMENTS

To make the objectives, technical solutions, and advantages of the present invention clearer, the following further describes the embodiments of the present invention in detail with reference to the accompanying drawings.

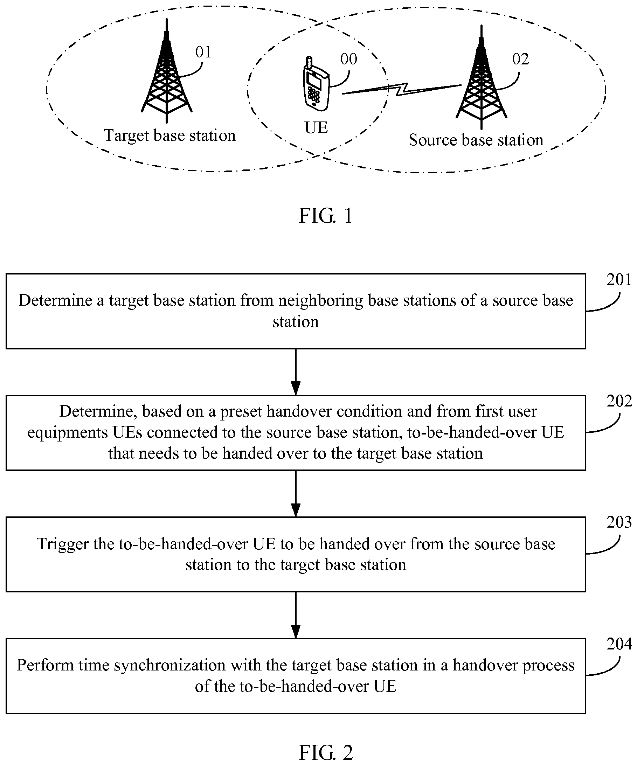

FIG. 1 is a schematic diagram of an environment of a time synchronization system related to a time synchronization method according to an embodiment of the present invention. The time synchronization system includes UE 00, a target base station 01, and a source base station 02. When the source base station 02 determines that the source base station 02 needs to perform time synchronization with the target base station 01, the source base station 02 may select to-be-handed-over UE, for example, the UE 00 shown in FIG. 1, from UEs connected to the source base station, and trigger the UE 00 to be handed over from the source base station 02 to the target base station 01, so that the source base station 02 can perform time synchronization with the target base station 01 by using a handover process of the UE 00. The time synchronization system may be a system of a different standard, and correspondingly the target base station 01 and the source base station 02 may be different devices. For example, when the time synchronization system is a Long Term Evolution (English: Long Term Evolution, LTE for short) system, the target base station 01 and the source base station 02 may be evolved NodeBs (English: Evolved NodeB, eNodeB for short); when the time synchronization system is a Global System for Mobile Communications (English: Global System for Mobile Communications, GSM for short) or a Code Division Multiple Access (English: Code Division Multiple Access, CDMA for short) system, the target base station 01 and the source base station 02 may be base station controllers (English: Base Station Controller, BSC for short); when the time synchronization system is a Universal Mobile Telecommunications System (English: Universal Mobile Telecommunications System, UMTS for short), the target base station 01 and the source base station 02 may be radio network controllers (English: Radio Network Controller, RNC for short); when the time synchronization system is a 5th generation (English: Five Generation, 5G for short) mobile communications system, the source base station and the target base station may be independent small cells, or may be cloud radio access networks (English: Cloud Radio Access Network, CRAN for short), or remote nodes (English: Remote Node, RN for short) or transmission points (English: Transmission Point, TP for short) in a non-cell (English: non-cell) system. This is not limited in this embodiment of the present invention.

FIG. 2 is a flowchart of a time synchronization method according to an embodiment of the present invention. The method may be applied to the source base station 02 shown in FIG. 1. As shown in FIG. 2, the method includes the following steps.

Step 201. Determine a target base station from neighboring base stations of a source base station.

Step 202. Determine, based on a preset handover condition and from first user equipments UEs connected to the source base station, to-be-handed-over UE that needs to be handed over to the target base station.

Step 203. Trigger the to-be-handed-over UE to be handed over from the source base station to the target base station.

Step 204. Perform time synchronization with the target base station in a handover process of the to-be-handed-over UE.

To sum up, according to the time synchronization method provided in this embodiment of the present invention, the source base station may determine the target base station from the neighboring base stations of the source base station, then determine, based on the preset handover condition and from the first UEs connected to the source base station, the to-be-handed-over UE that needs to be handed over to the target base station, and trigger the to-be-handed-over UE to be handed over from the source base station to the target base station. Therefore, when the source base station needs to be synchronized with a pre-determined target base station but there is no target UE satisfying an existing handover criterion, the source base station may select to-be-handed-over UE based on the preset handover condition, and actively trigger the to-be-handed-over UE to be handed over to the target base station. This implements time synchronization between the source base station and the target base station, and improves flexibility of time synchronization between the source base station and the target base station.

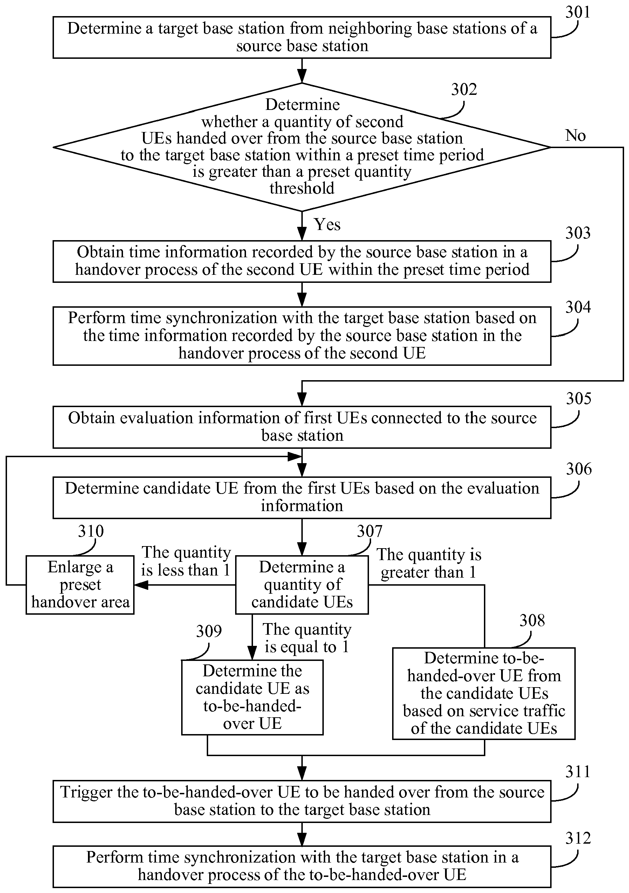

FIG. 3-1 is a flowchart of a time synchronization method according to an embodiment of the present invention. The method may be applied to the source base station shown in FIG. 1. As shown in FIG. 3-1, the method includes the following steps.

Step 301. Determine a target base station from neighboring base stations of a source base station, and perform step 302.

In this embodiment of the present invention, the source base station may determine a target base station from the neighboring base stations of the source base station every other preset time period, or determine a target base station from the neighboring base stations of the source base station when out-of-synchronization error information is received. The preset time period may be determined by the source base station based on synchronization precision required by a communications system. The out-of-synchronization error information may be generated by the source base station based on a detected out-of-synchronization problem, or may be sent by a base station controller to the source base station based on a problem of out-of-synchronization between base stations that occurs in a system, where the out-of-synchronization means that the base stations are out of synchronization due to an excessively large timing error.

In addition, it should be noted that when synchronization is performed by using a radio access network (English: Radio Access Network, RAN for short), for some time synchronization systems such as a 5G system, when the time synchronization system is in a period in which a non-synchronization service runs, or when no UE performs service transmission, the system is allowed to be in an out-of-synchronization state. However, before a synchronization service runs each time, or when the system has a synchronization requirement, the system may be triggered to perform synchronization, to be specific, the base station controller may send a synchronization instruction to the source base station, to instruct the source base station to perform time synchronization with the neighboring base stations of the source base station.

After determining that the source base station needs to be synchronized with the neighboring base stations, the source base station may select a base station from the neighboring base stations as the target base station. Specifically, the source base station may randomly select, from base stations recorded in a neighboring cell list of the source base station, a base station as the target base station; or the source base station may select a base station with a highest synchronization priority as the target base station based on a preset synchronization list, where base stations that are adjacent to the source base station and that need to be synchronized with the source base station, and synchronization priorities of the base stations are recorded in the synchronization list. For example, the preset synchronization list may be shown in Table 1. Synchronization priorities of three base stations that are adjacent to the source base station and that need to be synchronized with the source base station are recorded in the list. For example, a priority of a base station 10 is 1, and a priority of a base station 30 is 3, where a smaller numeral indicates a higher synchronization priority. Therefore, when the source base station determines that the source base station needs to perform time synchronization with the neighboring base stations, the source base station may select the base station 10 with the highest priority as the target base station based on the synchronization list shown in Table 1.

**Table 1**

| **Base station** | **Synchronization priority** |
|---|---|
| 10 | 1 |
| 20 | 2 |
| 30 | 3 |

It should be noted that after the source base station determines the base station 10 as the target base station and implements time synchronization with the target base station by triggering to-be-handed-over UE to be handed over to the target base station, the source base station may further update the synchronization list. For example, the source base station may set a lowest synchronization priority for the target base station. In this case, an updated synchronization list may be shown in Table 2. It can be learned from Table 2 that the base station 20 has a highest priority and the original target base station 10 has the lowest priority in the updated list.

**Table 2**

| **Base station** | **Synchronization priority** |
|---|---|
| 20 | 1 |
| 30 | 2 |
| 10 | 3 |

Step 302. Determine whether a quantity of second UEs handed over from the source base station to the target base station within a preset time period is greater than a preset quantity threshold.

In this embodiment of the present invention, after determining the target base station, the source base station may determine the quantity of second UEs handed over from the source base station to the target base station within the preset time period, where the preset time period may be a time period that is the same as the preset time period in step 301. When the quantity of second UEs is greater than the preset quantity threshold, the source base station may determine that precision of time synchronization between the source base station and the target base station can be ensured based on the quantity of second UEs that have completed handover within the preset time period, and perform step 303. When the quantity of second UEs handed over from the source base station to the target base station within the preset time period is not greater than the preset quantity threshold, the source base station may determine that precision of time synchronization between the source base station and the target base station in this case is relatively low, and perform step 305.

Step 303. Obtain time information recorded by the source base station in a handover process of the second UE within the preset time period, and perform step 304.

When the quantity of second UEs handed over from the source base station to the target base station within the preset time period is greater than the preset quantity threshold, the source base station may obtain the time information recorded by the source base station in the handover process of the second UE within the preset time period. The time information includes a first time point at which the target base station receives a random access preamble sent by the second UE, and a second time point at which the random access preamble is detected by the source base station. For example, it is assumed that the preset quantity threshold is 1, the preset time period is 30 seconds, and a quantity, detected by the source base station, of second UEs handed over from the source base station to the target base station within 30 seconds is 2. Because the quantity 2 is greater than the preset quantity threshold 1, the source base station may obtain first time points at which the target base station receives random access preambles sent by the two second UEs: Target_t1 and Target_t2, and second time points at which the random access preambles sent by the two second UEs are detected by the source base station: Source_t1 and Source_t2, where the first time points and the second time points are recorded by the source base station in processes in which the two second UEs are handed over to the target base station.

Step 304. Perform time synchronization with the target base station based on the time information recorded by the source base station in the handover process of the second UE.

If the quantity of second UEs is greater than 1, the source base station may obtain time information recorded in a handover process of each second UE, and calculate, based on the obtained time information, a time difference corresponding to the second UE. Then, the source base station may calculate an average value of a plurality of time differences, and perform time adjustment based on the average value. For example, the source base station may adjust a time of the source base station based on the average value, or the source base station may send the average value to the target base station, so that the target base station adjusts a time of the target base station based on the average value, so as to implement time synchronization between the source base station and the target base station. The source base station and the target base station perform time adjustment based on the average value of the plurality of time differences, thereby improving the precision of time synchronization between the source base station and the target base station.

For example, it is assumed that the time information obtained by the source base station includes: the first time points at which the target base station receives the random access preambles sent by the second UEs: Target_t1 and Target_t2, and the second time points at which the random access preambles sent by the second UEs are detected by the source base station: Source_t1 and Source_t2. The source base station may obtain time differences corresponding to the second UEs: Δ*t*1 and Δ*t*2, where Δ*t*1= *Source_t*1 - *T*arg*et*_*t*1 and Δ*t*2 = *Source*_*t*2 - *T*arg*et_t*2. Then, the source base station may calculate an average value Δ*t* of the two time differences, and perform time adjustment based on the average value Δ*t*, so that the source base station and the target base station implement time synchronization, where Δ*t* = (Δ*t*1 + Δ*t*2)/2.

Step 305. Obtain evaluation information of first UEs connected to the source base station, and perform step 306.

When the quantity of second UEs handed over from the source base station to the target base station within the preset time period is not greater than the preset quantity threshold, the source base station may determine that a quantity of times of time synchronization performed between the source base station and the target base station within the preset time period does not satisfy a preset criterion. To ensure the precision of time synchronization between the source base station and the target base station, the source base station may obtain the evaluation information of the first UEs connected to the source base station, and determine, based on the evaluation information, the to-be-handed-over UE that needs to be handed over from the source base station to the target base station. The evaluation information is used to reflect signal quality between the first UEs and the source base station and signal quality between the first UEs and the target base station. The evaluation information may include at least one of location information of the first UEs or neighboring cell detection reports of the first UEs.

Step 306. Determine candidate UE from the first UEs based on the evaluation information, and perform step 307.

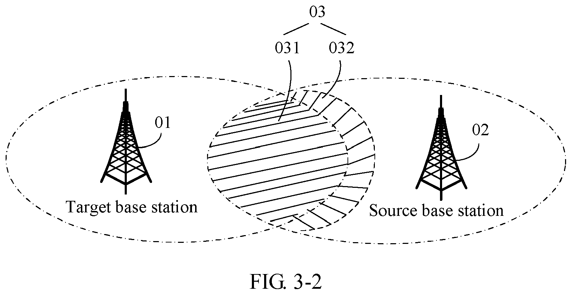

In this embodiment of the present invention, after obtaining the evaluation information of the first UEs, the source base station may determine, based on the location information of the first UEs or the neighboring cell detection reports of the first UEs in the evaluation information, areas in which the first UEs are located, and determine, among the first UEs, UE located in a preset handover area as the candidate UE. If positioning modules are disposed in the first UEs, the first UEs may obtain the location information of the first UEs by using the positioning modules, and report the location information to the source base station. If the evaluation information obtained by the source base station is the neighboring cell detection reports of the first UEs, the source base station may determine, based on signal quality or signal quality levels of the first UEs in the neighboring cell detection reports, the areas in which the first UEs are located, so as to further determine whether the first UEs are located in the preset handover area. The preset handover area is determined based on coverage areas of the source base station and the target base station. For example, as shown in FIG. 3-2, a preset handover area 03 may include an overlapping area 031 of a coverage area of a source base station 02 and a coverage area of a target base station 01, and may further include an area 032 that is adjacent to the overlapping area 031 and that is in the coverage area of the source base station. After detecting that UE located in the handover area 03 exists in the first UEs, the source base station 02 may determine the UE in the handover area 03 as the candidate UE.

In addition, in this embodiment of the present invention, the source base station may alternatively determine, based on the neighboring cell detection reports of the first UEs, first signal quality between the first UEs and the source base station and second signal quality between the first UEs and the target base station, and determine, among the first UEs, any of UE whose difference between first signal quality and second signal quality is less than a preset quality difference threshold, UE whose first signal quality is lower than a first preset quality threshold, or UE whose second signal quality is higher than a second preset quality threshold as the candidate UE. For the candidate UE, a difference between first signal quality and second signal quality is less than the preset quality difference threshold, or first signal quality is lower than the first preset quality threshold, or second signal quality is higher than the second preset quality threshold. Therefore, after the candidate UE is handed over to the target base station, relatively small impact is imposed on communication quality of the candidate UE. Therefore, the source base station may use one of the preset quality difference threshold, the first preset quality threshold, and the second preset quality as a determining criterion, and determine UE satisfying the criterion in the first UEs as the candidate UE.

It should be noted that, in this embodiment of the present invention, the candidate UE determined by the source base station may be UE determined based on the areas in which the first UEs are located, may be UE determined based on the signal quality between the first UEs and the source base station and the signal quality between the first UEs and the target base station, or may be a UE set determined based on the foregoing two conditions.

Step 307. Determine a quantity of candidate UEs.

When the quantity of candidate UEs is greater than 1, step 308 is performed; when the quantity of candidate UEs is equal to 1, step 309 is performed; or when the quantity of candidate UEs is less than 1, step 310 is performed.

Step 308. Determine to-be-handed-over UE from the candidate UEs based on service traffic of the candidate UEs, and perform step 311.

When the quantity of candidate UEs is greater than 1, the source base station may determine UE with minimum service traffic in the candidate UEs as the to-be-handed-over UE, thereby reducing impact of the handover process on a service of the to-be-handed-over UE.

It should be noted that, in actual application, if UE in an idle state (to be specific, there is no data transmission, and service traffic is 0) exists in the candidate UEs, the source base station may directly determine the UE in the idle state as the to-be-handed-over UE.

Step 309. Determine the candidate UE as to-be-handed-over UE, and perform step 311.

When the quantity of candidate UEs is equal to 1, the source base station may directly determine the candidate UE as the to-be-handed-over UE.

Step 310. Enlarge a preset handover area, and re-perform step 306.

When the quantity of candidate UEs is less than 1, the source base station may enlarge the preset handover area according to a preset criterion, and re-determine candidate UE from the first UEs based on the obtained evaluation information.

Step 311. Trigger the to-be-handed-over UE to be handed over from the source base station to the target base station, and perform step 312.

In this embodiment of the present invention, to reduce the impact of the handover process on the service of the to-be-handed-over UE, after determining the to-be-handed-over UE, the source base station may further monitor service traffic of the to-be-handed-over UE, and trigger the to-be-handed-over UE to be handed over from the source base station to the target base station when it is detected that the service traffic of the to-be-handed-over UE is 0, in other words, when the to-be-handed-over UE is in a data transmission gap. This reduces impact of the handover process on a service status of the to-be-handed-over UE, and ensures service continuity of the to-be-handed-over UE.

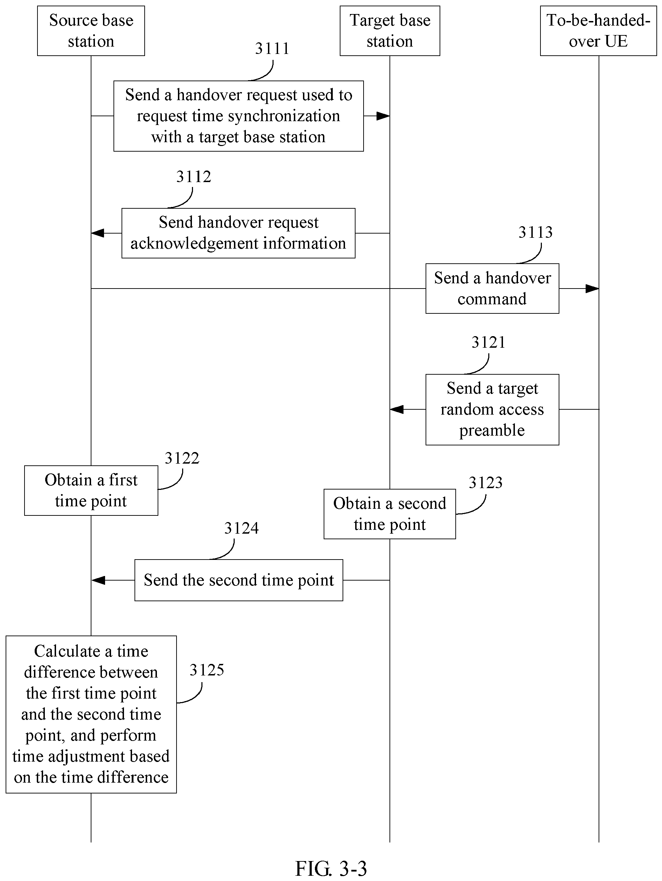

FIG. 3-3 is a flowchart of a method for triggering, by a source base station, to-be-handed-over UE to be handed over from the source base station to a target base station according to an embodiment of the present invention. As shown in FIG. 3-3, the process may include the following steps.

Step 3111. The source base station sends, to the target base station, a handover request used to request time synchronization with the target base station.

The handover request includes an identifier of the to-be-handed-over UE.

Step 3112. The target base station sends handover request acknowledgement information to the source base station.

After receiving the handover request, the target base station may determine that the source base station needs to perform time synchronization by using the handover process. Therefore, the target base station may allocate a target preamble to the to-be-handed-over UE, where the target preamble is a preamble used to uniquely identify time synchronization in one root sequence. Then, the target base station may send the handover request acknowledgement information to the source base station, where the handover request acknowledgement information includes a target random access preamble allocated by the target base station to the to-be-handed-over UE.

Step 3113. The source base station sends a handover instruction to the to-be-handed-over UE.

The handover instruction includes the target random access preamble, the handover instruction is used to instruct the to-be-handed-over UE to send a random access request to the target base station, and the random access request includes the target random access preamble.

Step 312. Perform time synchronization with the target base station in a handover process of the to-be-handed-over UE.

After triggering the to-be-handed-over UE to be handed over from the source base station to the target base station, the source base station may perform time synchronization with the target base station in the handover process of the to-be-handed-over UE. As shown in FIG. 3-2, a process of the time synchronization may include the following steps.

Step 3121. The to-be-handed-over UE sends a target random access preamble to the target base station.

After receiving the handover instruction sent by the source base station, the to-be-handed-over UE may send the random access request to the target base station, where the random access request includes the target random access preamble.

Step 3122. The source base station obtains a first time point.

In this embodiment of the present invention, after receiving the handover request acknowledgement information sent by the target base station, the source base station may start to perform blind detection. The blind detection means that the source base station detects the target random access preamble in the random access message sent by the to-be-handed-over UE to the target base station. After detecting, through blind detection, that the to-be-handed-over UE sends the target random access preamble to the target base station, the source base station may determine a time point at which the target random access preamble is detected as the first time point.

Step 3123. The target base station obtains a second time point.

The second time point is a time point at which the target base station receives the target random access preamble sent by the to-be-handed-over UE. The random access message that is received by the target base station and that is sent by the to-be-handed-over UE includes the target random access preamble. The target base station may determine a time point at which the target random access preamble is detected as the second time point.

Step 3124. The target base station sends the second time point to the source base station.

After receiving the random access message sent by the to-be-handed-over UE and confirming that the to-be-handed-over UE has successfully connected to a serving cell managed by the target base station, the target base station may send a resource release message to the source base station, to prompt the source base station that the to-be-handed-over UE is successfully handed over, where the resource release message may include the second time point at which the target random access preamble is detected by the target base station.

It should be noted that, in actual application, if the to-be-handed-over UE is not successfully handed over to the target base station, the target base station may directly send, to the source base station after receiving the target random access preamble sent by the to-be-handed-over UE, the second time point at which the target random access preamble is detected by the target base station.

For the to-be-handed-over UE, if the to-be-handed-over UE is not successfully handed over, the to-be-handed-over UE enters a cell reselection mode, namely, a connection re-establishment mode, and reselects a to-be-accessed cell. In this case, the to-be-handed-over UE may connect to a serving cell managed by the source base station, or may connect to a new serving cell.

Step 3125. The source base station calculates a time difference between the first time point and the second time point, and performs time adjustment based on the time difference.

After receiving the second time point sent by the target base station, the source base station may calculate the time difference between the first time point and the second time point, and adjust a time of the source base station based on the time difference, so as to implement time synchronization between the source base station and the target base station, where the time difference is equal to the first time point minus the second time point. In addition, after receiving the second time point sent by the target base station, the source base station may alternatively send the first time point, the second time point, an identifier of the source base station, and an identifier of the target base station to a base station controller, so that the base station controller calculates the time difference between the first time point and the second time point and sends the time difference, obtained through calculation, to the source base station based on the identifier of the source base station. The source base station may perform time adjustment based on the time difference, to implement time synchronization between the source base station and the target base station.

It should be noted that, after step 3123, the source base station may alternatively send the first time point to the target base station, so that the target base station calculates the time difference between the first time point and the second time point and performs time adjustment based on the time difference. This is not limited in this embodiment of the present invention.

It should be further noted that a chronological order of steps of the time synchronization method provided in this embodiment of the present invention may be properly adjusted, and steps may be correspondingly added or deleted depending on a circumstance. Any varied method readily figured out by a person skilled in the art within the technical scope disclosed in the present invention shall fall within the protection scope of the present invention, and details are not described herein.

To sum up, according to the time synchronization method provided in this embodiment of the present invention, the source base station may determine the target base station from the neighboring base stations of the source base station, then determine, based on the preset handover condition and from the first UEs connected to the source base station, the to-be-handed-over UE that needs to be handed over to the target base station, and trigger the to-be-handed-over UE to be handed over from the source base station to the target base station. Therefore, when the source base station needs to be synchronized with a pre-determined target base station but there is no target UE satisfying an existing handover criterion, the source base station may select to-be-handed-over UE based on the preset handover condition, and actively trigger the to-be-handed-over UE to be handed over to the target base station. This implements time synchronization between the source base station and the target base station, and improves flexibility of time synchronization between the source base station and the target base station.

It should be noted that the time synchronization method provided in this embodiment of the present invention may be applied to a macro-macro network, to be specific, to time synchronization between macro base stations; may be applied to a heterogeneous network (English: HetNet), to be specific, to time synchronization between a macro base station and a small cell or between small cells; or may be applied to an indoor scenario. This is not limited in this embodiment of the present invention. Moreover, standards of the source base station and the target base stations are not limited in this embodiment of the present invention. The source base station and the target base station may be base stations in any one of 2G, 3G, 4G, 5G, and next-generation communications systems, where the source base station may also be a source cell served by the source base station, and the target base station may also be a target cell served by the target base station. Further, the to-be-handed-over UE may be handed over from the source base station to the target base station in any one of the following at least two handover manners: handover based on an X2 interface and handover based on an S1 interface. This is not limited in this embodiment of the present invention.

It should be further noted that the term "and/or" in the present invention is merely an association relationship for describing associated objects, and three relationships may exist, for example, A and/or B may indicate that only A exists, both A and B exist, or only B exists. In addition, the character "/" in this specification generally indicates an "or" relationship between contextually associated objects. In addition, the term "at least one of A or B" in the present invention is merely an association relationship for describing associated objects, and three relationships may exist, for example, at least one of A or B may indicate that only A exists, both A and B exist, or only B exists.

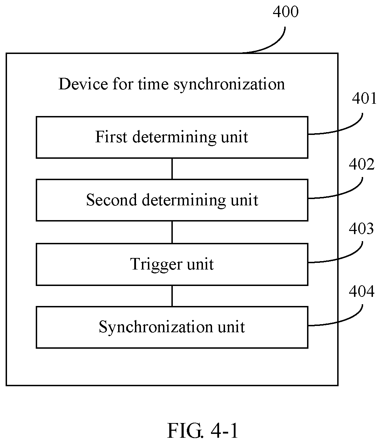

FIG. 4-1 is a schematic structural diagram of a device for time synchronization according to an embodiment of the present invention. The device may be disposed in the source base station shown in FIG. 1. As shown in FIG. 4-1, the device 400 includes:
a first determining unit 401, configured to determine a target base station from neighboring base stations of a source base station;
a second determining unit 402, configured to determine, based on a preset handover condition and from first user equipments UEs connected to the source base station, to-be-handed-over UE that needs to be handed over to the target base station;
a trigger unit 403, configured to trigger the to-be-handed-over UE to be handed over from the source base station to the target base station; and
a synchronization unit 404, configured to perform time synchronization with the target base station in a handover process of the to-be-handed-over UE.

To sum up, according to the device for time synchronization provided in this embodiment of the present invention, the source base station may determine the target base station from the neighboring base stations of the source base station, then determine, based on the preset handover condition and from the first UEs connected to the source base station, the to-be-handed-over UE that needs to be handed over to the target base station, and trigger the to-be-handed-over UE to be handed over from the source base station to the target base station. Therefore, when the source base station needs to be synchronized with a pre-determined target base station but there is no target UE satisfying an existing handover criterion, the source base station may select to-be-handed-over UE based on the preset handover condition, and actively trigger the to-be-handed-over UE to be handed over to the target base station. This implements time synchronization between the source base station and the target base station, and improves flexibility of time synchronization between the source base station and the target base station.

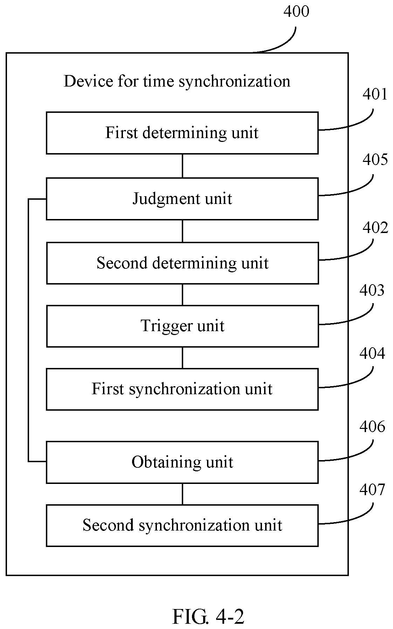

FIG. 4-2 is a schematic structural diagram of another device for time synchronization according to an embodiment of the present invention. The device may be disposed in the source base station shown in FIG. 1. As shown in FIG. 4-2, the device 400 includes:
a first determining unit 401, configured to determine a target base station from neighboring base stations of a source base station;
a second determining unit 402, configured to determine, based on a preset handover condition and from first user equipments UEs connected to the source base station, to-be-handed-over UE that needs to be handed over to the target base station;
a trigger unit 403, configured to trigger the to-be-handed-over UE to be handed over from the source base station to the target base station;
a first synchronization unit 404, configured to perform time synchronization with the target base station in a handover process of the to-be-handed-over UE;
a judgment unit 405, configured to determine whether a quantity of second UEs handed over from the source base station to the target base station within a preset time period is greater than a preset quantity threshold, where
the second determining unit 402 is further configured to: when the quantity of second UEs handed over from the source base station to the target base station within the preset time period is not greater than the preset quantity threshold, determine the to-be-handed-over UE from the first UEs based on the preset handover condition;
an obtaining unit 406, configured to: when the quantity of second UEs handed over from the source base station to the target base station within the preset time period is greater than the preset quantity threshold, obtain time information recorded by the source base station in a handover process of the second UE within the preset time period, where the time information includes a first time point at which the target base station receives a random access preamble sent by the second UE, and a second time point at which the random access preamble is detected by the source base station; and
a second synchronization unit 407, configured to perform time synchronization with the target base station based on the time information recorded by the source base station in the handover process of the second UE.

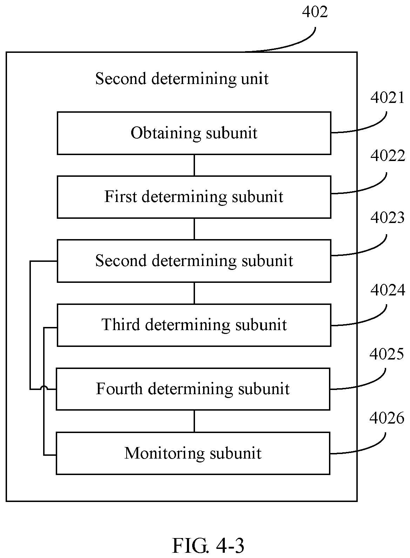

FIG. 4-3 is a schematic structural diagram of a second determining unit according to an embodiment of the present invention. As shown in FIG. 4-3, the second determining unit 402 may include:
an obtaining subunit 4021, configured to obtain evaluation information of the first UEs, where the evaluation information is used to reflect signal quality between the first UEs and the source base station and signal quality between the first UEs and the target base station;
a first determining subunit 4022, configured to determine candidate UE from the first UEs based on the evaluation information;
a second determining subunit 4023, configured to determine a quantity of candidate UEs; and
a third determining subunit 4024, configured to: when the quantity of candidate UEs is greater than 1, determine the to-be-handed-over UE from the candidate UEs based on service traffic of the candidate UEs.

Optionally, the evaluation information includes at least one of location information of the first UEs or neighboring cell detection reports of the first UEs; and
the second determining subunit 4024 is further configured to:
determine, based on the location information of the first UEs or the neighboring cell detection reports of the first UEs, areas in which the first UEs are located, and determine, among the first UEs, UE located in a preset handover area as the candidate UE, where the preset handover area is determined based on coverage areas of the source base station and the target base station; and/or
determine, based on the neighboring cell detection reports of the first UEs, first signal quality between the first UEs and the source base station and second signal quality between the first UEs and the target base station, and determine, among the first UEs, UE whose difference between first signal quality and second signal quality is less than a preset quality difference threshold as the candidate UE.

Optionally, the third determining subunit 4024 is further configured to:
determine UE with minimum service traffic in the candidate UEs as the to-be-handed-over UE.

Optionally, as shown in FIG. 4-3, the second determining unit 402 may further include:
a fourth determining subunit 4025, configured to: when the quantity of candidate UEs is less than 1, enlarge the preset handover area, and re-determine candidate UE from the first UEs based on the evaluation information.

Optionally, as shown in FIG. 4-3, the second determining unit 402 may further include:
a monitoring subunit 4026, configured to monitor service traffic of the to-be-handed-over UE; and
the trigger unit 403 is further configured to:
   when it is detected that the service traffic of the to-be-handed-over UE is 0, trigger the to-be-handed-over UE to be handed over from the source base station to the target base station.

Optionally, the first determining unit 401 is further configured to:
determine the target base station from the neighboring base stations of the source base station every other preset time period; or
determine the target base station from the neighboring base stations of the source base station when out-of-synchronization error information is received.

Optionally, the first determining unit 401 is further configured to:
randomly select, from the neighboring base stations of the source base station, a base station as the target base station; or
select a base station with a highest synchronization priority as the target base station based on a preset synchronization list, where base stations that need to be synchronized with the source base station, and synchronization priorities of the base stations are recorded in the synchronization list.

Optionally, the trigger unit 403 is further configured to:
send, to the target base station, a handover request used to request time synchronization with the target base station, where the handover request includes an identifier of the to-be-handed-over UE;
receive handover request acknowledgement information sent by the target base station, where the handover request acknowledgement information includes a target random access preamble allocated by the target base station to the to-be-handed-over UE; and
send a handover instruction to the to-be-handed-over UE, where the handover instruction includes the target random access preamble, the handover instruction is used to instruct the to-be-handed-over UE to send a random access request to the target base station, and the random access request includes the target random access preamble; and
the first synchronization unit 404 is further configured to:
   obtain a first time point, where the first time point is a time point at which the target random access preamble sent by the to-be-handed-over UE to the target base station is detected by the source base station;
   receive a second time point sent by the target base station, where the second time point is a time point at which the target base station receives the target random access preamble sent by the to-be-handed-over UE; and
   calculate a time difference between the first time point and the second time point, and perform time adjustment based on the time difference.

To sum up, according to the device for time synchronization provided in this embodiment of the present invention, the source base station may determine the target base station from the neighboring base stations of the source base station, then determine, based on the preset handover condition and from the first UEs connected to the source base station, the to-be-handed-over UE that needs to be handed over to the target base station, and trigger the to-be-handed-over UE to be handed over from the source base station to the target base station. Therefore, when the source base station needs to be synchronized with a pre-determined target base station but there is no target UE satisfying an existing handover criterion, the source base station may select to-be-handed-over UE based on the preset handover condition, and actively trigger the to-be-handed-over UE to be handed over to the target base station. This implements time synchronization between the source base station and the target base station, and improves flexibility of time synchronization between the source base station and the target base station.

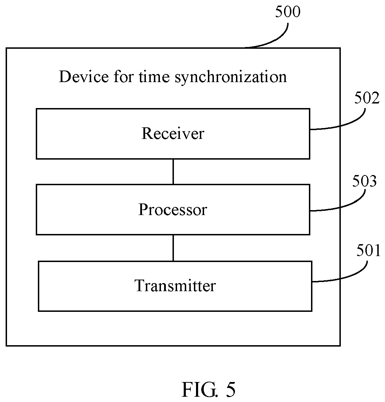

FIG. 5 shows still another device for time synchronization according to an embodiment of the present invention. The device 500 is applied to a source base station and includes a transmitter 501, a receiver 502, and a processor 503.

The processor 503 is configured to:
determine a target base station from neighboring base stations of the source base station;
determine, based on a preset handover condition and from first user equipments UEs connected to the source base station, to-be-handed-over UE that needs to be handed over to the target base station, where the target base station is a neighboring base station of the source base station;
trigger the to-be-handed-over UE to be handed over from the source base station to the target base station; and
perform time synchronization with the target base station in a handover process of the to-be-handed-over UE.

To sum up, according to the device for time synchronization provided in this embodiment of the present invention, the source base station may determine the target base station from the neighboring base stations of the source base station, then determine, based on the preset handover condition and from the first UEs connected to the source base station, the to-be-handed-over UE that needs to be handed over to the target base station, and trigger the to-be-handed-over UE to be handed over from the source base station to the target base station. Therefore, when the source base station needs to be synchronized with a pre-determined target base station but there is no target UE satisfying an existing handover criterion, the source base station may select to-be-handed-over UE based on the preset handover condition, and actively trigger the to-be-handed-over UE to be handed over to the target base station. This implements time synchronization between the source base station and the target base station, and improves flexibility of time synchronization between the source base station and the target base station.

Optionally, the processor 503 is further configured to:
determine whether a quantity of second UEs handed over from the source base station to the target base station within a preset time period is greater than a preset quantity threshold; and
when the quantity of second UEs handed over from the source base station to the target base station within the preset time period is not greater than the preset quantity threshold, determine the to-be-handed-over UE from the first UEs based on the preset handover condition.

Optionally, the processor 503 is further configured to:
when the quantity of second UEs handed over from the source base station to the target base station within the preset time period is greater than the preset quantity threshold, obtain time information recorded by the source base station in a handover process of the second UE within the preset time period, where the time information includes a first time point at which the target base station receives a random access preamble sent by the second UE, and a second time point at which the random access preamble is detected by the source base station; and
perform time synchronization with the target base station based on the time information recorded by the source base station in the handover process of the second UE.

Optionally, the processor 503 is further configured to:
obtain evaluation information of the first UEs, where the evaluation information is used to reflect signal quality between the first UEs and the source base station and signal quality between the first UEs and the target base station;
determine candidate UE from the first UEs based on the evaluation information;
determine a quantity of candidate UEs; and
when the quantity of candidate UEs is greater than 1, determine the to-be-handed-over UE from the candidate UEs based on service traffic of the candidate UEs.

Optionally, the evaluation information includes at least one of location information of the first UEs or neighboring cell detection reports of the first UEs; and
the processor 503 is further configured to:
determine, based on the location information of the first UEs or the neighboring cell detection reports of the first UEs, areas in which the first UEs are located, and determine, among the first UEs, UE located in a preset handover area as the candidate UE, where the preset handover area is determined based on coverage areas of the source base station and the target base station; and/or
determine, based on the neighboring cell detection reports of the first UEs, first signal quality between the first UEs and the source base station and second signal quality between the first UEs and the target base station, and determine, among the first UEs, UE whose difference between first signal quality and second signal quality is less than a preset quality difference threshold as the candidate UE.

Optionally, the processor 503 is further configured to:
determine UE with minimum service traffic in the candidate UEs as the to-be-handed-over UE.

Optionally, the processor 503 is further configured to:
monitor service traffic of the to-be-handed-over UE; and
when it is detected that the service traffic of the to-be-handed-over UE is 0, trigger the to-be-handed-over UE to be handed over from the source base station to the target base station.

Optionally, the processor 503 is further configured to:
determine the target base station from the neighboring base stations of the source base station every other preset time period; or
determine the target base station from the neighboring base stations of the source base station when out-of-synchronization error information is received.

Optionally, the processor 503 is further configured to:
randomly select, from the neighboring base stations of the source base station, a base station as the target base station; or
select a base station with a highest synchronization priority as the target base station based on a preset synchronization list, where base stations that are adjacent to the source base station and that need to be synchronized with the source base station, and synchronization priorities of the base stations are recorded in the synchronization list.

Optionally, the transmitter 501 is configured to send, to the target base station, a handover request used to request time synchronization with the target base station, where the handover request includes an identifier of the to-be-handed-over UE.

Optionally, the receiver 502 is configured to receive handover request acknowledgement information sent by the target base station, where the handover request acknowledgement information includes a target random access preamble allocated by the target base station to the to-be-handed-over UE.

The transmitter 501 is further configured to send a handover instruction to the to-be-handed-over UE, where the handover instruction includes the target random access preamble, the handover instruction is used to instruct the to-be-handed-over UE to send a random access request to the target base station, and the random access request includes the target random access preamble.

The processor 503 is further configured to:
obtain a first time point, where the first time point is a time point at which the target random access preamble sent by the to-be-handed-over UE to the target base station is detected by the source base station.

The receiver 502 is further configured to receive a second time point sent by the target base station, where the second time point is a time point at which the target base station receives the target random access preamble sent by the to-be-handed-over UE.

The processor 503 is further configured to calculate a time difference between the first time point and the second time point, and perform time adjustment based on the time difference.

To sum up, according to the device for time synchronization provided in this embodiment of the present invention, the source base station may determine the target base station from the neighboring base stations of the source base station, then determine, based on the preset handover condition and from the first UEs connected to the source base station, the to-be-handed-over UE that needs to be handed over to the target base station, and trigger the to-be-handed-over UE to be handed over from the source base station to the target base station. Therefore, when the source base station needs to be synchronized with a pre-determined target base station but there is no target UE satisfying an existing handover criterion, the source base station may select to-be-handed-over UE based on the preset handover condition, and actively trigger the to-be-handed-over UE to be handed over to the target base station. This implements time synchronization between the source base station and the target base station, and improves flexibility of time synchronization between the source base station and the target base station.

It may be clearly understood by a person skilled in the art that, for the purpose of convenient and brief description, for detailed working processes of the foregoing devices and units, reference may be made to a corresponding process in the foregoing method embodiments, and details are not described herein again.

An embodiment of the present invention provides a time synchronization system. The system includes a source base station, and the source base station includes the device 400 for time synchronization shown in FIG. 4-1 or FIG. 4-2.

An embodiment of the present invention provides another time synchronization system. The system includes a source base station, and the source base station includes the device 500 for time synchronization shown in FIG. 5.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely example embodiments of the present invention, but are not intended to limit the present invention. Any modification, equivalent replacement, and improvement made without departing from the spirit and principle of the present invention shall fall within the protection scope of the present invention.

## Claims

1. A time synchronization method, wherein the method is applied to a source base station and comprises:
determining a target base station from neighboring base stations of the source base station;
determining, based on a preset handover condition and from first user equipments UEs connected to the source base station, to-be-handed-over UE that needs to be handed over to the target base station;
triggering the to-be-handed-over UE to be handed over from the source base station to the target base station; and
performing time synchronization with the target base station in a handover process of the to-be-handed-over UE.

2. The method according to claim 1, wherein before the determining, based on a preset handover condition and from first UEs connected to the source base station, to-be-handed-over UE that needs to be handed over to the target base station, the method further comprises:
determining whether a quantity of second UEs handed over from the source base station to the target base station within a preset time period is greater than a preset quantity threshold; and
the determining, based on a preset handover condition and from first UEs connected to the source base station, to-be-handed-over UE that needs to be handed over to the target base station comprises:
when the quantity of second UEs handed over from the source base station to the target base station within the preset time period is not greater than the preset quantity threshold, determining the to-be-handed-over UE from the first UEs based on the preset handover condition.

3. The method according to claim 2, wherein after the determining whether a quantity of second UEs handed over from the source base station to the target base station within a preset time period is greater than a preset quantity threshold, the method further comprises:
when the quantity of second UEs handed over from the source base station to the target base station within the preset time period is greater than the preset quantity threshold, obtaining time information recorded by the source base station in a handover process of the second UE within the preset time period, wherein the time information comprises a first time point at which the target base station receives a random access preamble sent by the second UE, and a second time point at which the random access preamble is detected by the source base station; and
performing time synchronization with the target base station based on the time information recorded by the source base station in the handover process of the second UE.

4. The method according to any one of claims 1 to 3, wherein the determining, based on a preset handover condition and from first UEs connected to the source base station, to-be-handed-over UE that needs to be handed over to the target base station comprises:
obtaining evaluation information of the first UEs, wherein the evaluation information is used to reflect signal quality between the first UEs and the source base station and signal quality between the first UEs and the target base station;
determining candidate UE from the first UEs based on the evaluation information;
determining a quantity of candidate UEs; and
when the quantity of candidate UEs is greater than 1, determining the to-be-handed-over UE from the candidate UEs based on service traffic of the candidate UEs.

5. The method according to claim 4, wherein the evaluation information comprises at least one of location information of the first UEs or neighboring cell detection reports of the first UEs; and
the determining candidate UE from the first UEs based on the evaluation information comprises:
determining, based on the location information of the first UEs or the neighboring cell detection reports of the first UEs, areas in which the first UEs are located, and determining, among the first UEs, UE located in a preset handover area as the candidate UE, wherein the preset handover area is determined based on coverage areas of the source base station and the target base station; and/or
determining, based on the neighboring cell detection reports of the first UEs, first signal quality between the first UEs and the source base station and second signal quality between the first UEs and the target base station, and determining, among the first UEs, UE whose difference between first signal quality and second signal quality is less than a preset quality difference threshold, UE whose first signal quality is lower than a first preset quality threshold, or UE whose second signal quality is higher than a second preset quality threshold as the candidate UE.

6. The method according to claim 5, wherein after the determining a quantity of candidate UEs, the method further comprises:
when the quantity of candidate UEs is less than 1, enlarging the preset handover area, and re-determining candidate UE from the first UEs based on the evaluation information.

7. The method according to claim 4, wherein the determining the to-be-handed-over UE from the candidate UEs based on service traffic of the candidate UEs comprises:
determining UE with minimum service traffic in the candidate UEs as the to-be-handed-over UE.

8. The method according to claim 4, wherein after the determining the to-be-handed-over UE from the candidate UEs based on service traffic of the candidate UEs, the method further comprises:
monitoring service traffic of the to-be-handed-over UE; and
the triggering the to-be-handed-over UE to be handed over from the source base station to the target base station comprises:
when it is detected that the service traffic of the to-be-handed-over UE is 0, triggering the to-be-handed-over UE to be handed over from the source base station to the target base station.

9. The method according to any one of claims 1 to 8, wherein the determining a target base station from neighboring base stations of the source base station comprises:
determining the target base station from the neighboring base stations of the source base station every other preset time period; or
determining the target base station from the neighboring base stations of the source base station when out-of-synchronization error information is received; or
determining the target base station from the neighboring base stations of the source base station when a synchronization instruction is received.

10. The method according to any one of claims 1 to 9, wherein the determining a target base station from neighboring base stations of the source base station comprises:
randomly selecting, from the neighboring base stations of the source base station, a base station as the target base station; or
selecting a base station with a highest synchronization priority as the target base station based on a preset synchronization list, wherein base stations that are adjacent to the source base station and that need to be synchronized with the source base station, and synchronization priorities of the base stations are recorded in the synchronization list.

11. The method according to any one of claims 1 to 10, wherein
the triggering the to-be-handed-over UE to be handed over from the source base station to the target base station comprises:
sending, to the target base station, a handover request used to request time synchronization with the target base station, wherein the handover request comprises an identifier of the to-be-handed-over UE;
receiving handover request acknowledgement information sent by the target base station, wherein the handover request acknowledgement information comprises a target random access preamble allocated by the target base station to the to-be-handed-over UE; and
sending a handover instruction to the to-be-handed-over UE, wherein the handover instruction comprises the target random access preamble, the handover instruction is used to instruct the to-be-handed-over UE to send a random access request to the target base station, and the random access request comprises the target random access preamble; and
the performing time synchronization with the target base station in a handover process of the to-be-handed-over UE comprises:
obtaining a first time point, wherein the first time point is a time point at which the target random access preamble sent by the to-be-handed-over UE to the target base station is detected by the source base station;
receiving a second time point sent by the target base station, wherein the second time point is a time point at which the target base station receives the target random access preamble sent by the to-be-handed-over UE; and
calculating a time difference between the first time point and the second time point, and performing time adjustment based on the time difference.

12. A device for time synchronization, wherein the device is applied to a source base station and comprises:
a first determining unit, configured to determine a target base station from neighboring base stations of the source base station;
a second determining unit, configured to determine, based on a preset handover condition and from first user equipments UEs connected to the source base station, to-be-handed-over UE that needs to be handed over to the target base station, wherein the target base station is a neighboring base station of the source base station;
a trigger unit, configured to trigger the to-be-handed-over UE to be handed over from the source base station to the target base station; and
a first synchronization unit, configured to perform time synchronization with the target base station in a handover process of the to-be-handed-over UE.

13. The device according to claim 12, wherein the device further comprises:
a judgment unit, configured to determine whether a quantity of second UEs handed over from the source base station to the target base station within a preset time period is greater than a preset quantity threshold, wherein
the second determining unit is further configured to: when the quantity of second UEs handed over from the source base station to the target base station within the preset time period is not greater than the preset quantity threshold, determine the to-be-handed-over UE from the first UEs based on the preset handover condition.

14. The device according to claim 13, wherein the device further comprises:
an obtaining unit, configured to: when the quantity of second UEs handed over from the source base station to the target base station within the preset time period is greater than the preset quantity threshold, obtain time information recorded by the source base station in a handover process of the second UE within the preset time period, wherein the time information comprises a first time point at which the target base station receives a random access preamble sent by the second UE, and a second time point at which the random access preamble is detected by the source base station; and
a second synchronization unit, configured to perform time synchronization with the target base station based on the time information recorded by the source base station in the handover process of the second UE.

15. The device according to any one of claims 12 to 14, wherein the second determining unit comprises:
an obtaining subunit, configured to obtain evaluation information of the first UEs, wherein the evaluation information is used to reflect signal quality between the first UEs and the source base station and signal quality between the first UEs and the target base station;
a first determining subunit, configured to determine candidate UE from the first UEs based on the evaluation information;
a second determining subunit, configured to determine a quantity of candidate UEs; and
a third determining subunit, configured to: when the quantity of candidate UEs is greater than 1, determine the to-be-handed-over UE from the candidate UEs based on service traffic of the candidate UEs.

16. The device according to claim 15, wherein the evaluation information comprises at least one of location information of the first UEs or neighboring cell detection reports of the first UEs; and
the first determining subunit is further configured to:
determine, based on the location information of the first UEs or the neighboring cell detection reports of the first UEs, areas in which the first UEs are located, and determine, among the first UEs, UE located in a preset handover area as the candidate UE, wherein the preset handover area is determined based on coverage areas of the source base station and the target base station; and/or
determine, based on the neighboring cell detection reports of the first UEs, first signal quality between the first UEs and the source base station and second signal quality between the first UEs and the target base station, and determine, among the first UEs, UE whose difference between first signal quality and second signal quality is less than a preset quality difference threshold, UE whose first signal quality is lower than a first preset quality threshold, or UE whose second signal quality is higher than a second preset quality threshold as the candidate UE.

17. The device according to claim 16, wherein the second determining unit further comprises:
a fourth determining subunit, configured to: when the quantity of candidate UEs is less than 1, enlarge the preset handover area, and re-determine candidate UE from the first UEs based on the evaluation information.

18. The device according to claim 15, wherein the third determining subunit is further configured to:
determine UE with minimum service traffic in the candidate UEs as the to-be-handed-over UE.

19. The device according to claim 15, wherein the second determining unit further comprises:
a monitoring subunit, configured to monitor service traffic of the to-be-handed-over UE; and
the trigger unit is further configured to:
when it is detected that the service traffic of the to-be-handed-over UE is 0, trigger the to-be-handed-over UE to be handed over from the source base station to the target base station.

20. The device according to any one of claims 12 to 19, wherein the first determining unit is further configured to:
determine the target base station from the neighboring base stations of the source base station every other preset time period; or
determine the target base station from the neighboring base stations of the source base station when out-of-synchronization error information is received; or
determine the target base station from the neighboring base stations of the source base station when a synchronization instruction is received.

21. The device according to any one of claims 12 to 20, wherein the first determining unit is further configured to:
randomly select, from the neighboring base stations of the source base station, a base station as the target base station; or
select a base station with a highest synchronization priority as the target base station based on a preset synchronization list, wherein base stations that are adjacent to the source base station and that need to be synchronized with the source base station, and synchronization priorities of the base stations are recorded in the synchronization list.

22. The device according to any one of claims 12 to 21, wherein
the trigger unit is further configured to:
send, to the target base station, a handover request used to request time synchronization with the target base station, wherein the handover request comprises an identifier of the to-be-handed-over UE;
receive handover request acknowledgement information sent by the target base station, wherein the handover request acknowledgement information comprises a target random access preamble allocated by the target base station to the to-be-handed-over UE; and
send a handover instruction to the to-be-handed-over UE, wherein the handover instruction comprises the target random access preamble, the handover instruction is used to instruct the to-be-handed-over UE to send a random access request to the target base station, and the random access request comprises the target random access preamble; and
the first synchronization unit is further configured to:
obtain a first time point, wherein the first time point is a time point at which the target random access preamble sent by the to-be-handed-over UE to the target base station is detected by the source base station;
receive a second time point sent by the target base station, wherein the second time point is a time point at which the target base station receives the target random access preamble sent by the to-be-handed-over UE; and
calculate a time difference between the first time point and the second time point, and perform time adjustment based on the time difference.

23. A time synchronization system, wherein the system comprises a source base station; and
the source base station comprises the device for time synchronization according to any one of claims 12 to 22.
